# FASCICULE DE BREVET EUROPEEN

(11) **EP 2 151 343 B1**
(45) Date de publication et mention de la délivrance du brevet: **23.03.2016**
(21) Numéro de dépôt: 09350007.2
(22) Date de dépôt: 24.07.2009
(51) Int. Cl.: B62D 21/10, B60K 1/04, B60L 11/18, B62D 23/00, B62D 25/20, B62D 31/00

(54) **Véhicule de petite taille**
Kleines Fahrzeug
Small vehicle

(30) Priorité: 07.08.2008 FR 0855460
(43) Date de publication de la demande: 10.02.2010
(73) Titulaire: Mia Electric, 79143 Cerizay (FR)
(72) Inventeur: Guillez, Jean Marc, 79140 Cirières (FR)
(74) Mandataire: Tournel, Jean Louis

(56) Documents cités:
- EP-A- 0 547 953
- EP-A2- 2 072 308
- WO-A-03/078192
- DE-A1- 4 329 861
- FR-A- 2 890 366
- US-A- 5 392 873

## Description

La présente invention concerne un véhicule de petite taille.

Le document EP 0 547 953 A divulgue un tel véhicule, selon le préambule de la revendication 1.

Un tel véhicule comprend une structure tubulaire en forme de cadre fermé réalisée à partir de tubes profilés, et un ensemble de batteries destinées à emmagasiner l'énergie pour le déplacement du véhicule.

Le but de l'invention est de proposer un véhicule de petite taille de conception très simple offrant une bonne résistance et une grande sécurité, et permettant de loger aisément des batteries et un dispositif de propulsion et de les protéger, notamment en cas d'accident.

Selon l'invention, dans le véhicule du type précité, l'ensemble des batteries et le dispositif de propulsion sont insérés dans la partie intérieure du cadre de sorte qu'en cas de choc du véhicule, elles puissent s'appuyer contre les tubes du cadre.

Ainsi, le cadre de la structure tubulaire ceinture l'ensemble des batteries et le dispositif de propulsion et, en conséquence, limite leur déplacement en cas de choc.

D'autres particularités et avantages apparaîtront dans la description d'un mode de réalisation donné à titre d'exemple non limitatif et illustré par les dessins mis en annexe dans lesquels :
La figure 1 est une vue en perspective arrière d'un véhicule conforme à la présente invention,
La figure 2 est une vue similaire à la figure 1, la structure tubulaire étant représentés,
La figure 3 est une vue en perspective éclatée de la partie inférieure de la structure tubulaire de la figure 2,
La figure 4 est une vue similaire à la figure 3, l'éclatement de la partie inférieure étant limité à deux éléments, et
La figure 5 est une vue en coupe longitudinale de la partie inférieure de la structure tubulaire selon la ligne V-V de la figure 4.

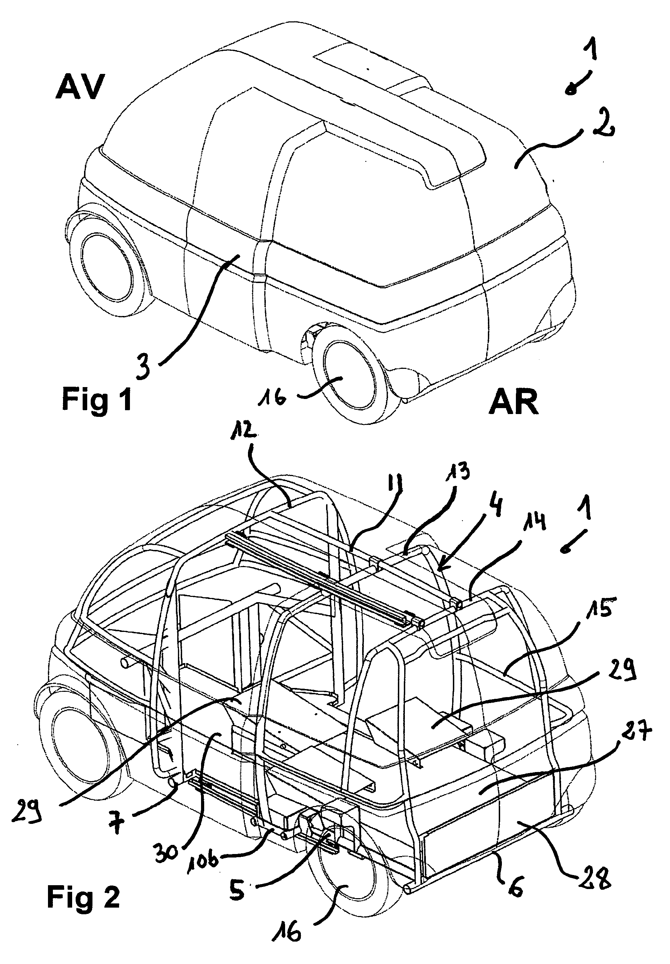

Un véhicule 1 de petite taille tel que celui illustré à la figure 1 comprend un habitacle pour des passagers délimité par une carrosserie 2. Il comprend également des portes latérales 3, chaque porte latérale 3 étant mobile (ici, en translation) entre, d'une part, une position ouverte dans laquelle elle dégage une ouverture réalisée dans la carrosserie 2 et permettant aux passagers d'avoir un accès à l'habitacle et, d'autre part, une position fermée dans laquelle elle obstrue cette ouverture.

Comme illustré à la figure 2, le véhicule 1 comprend également une structure tubulaire en forme de cage de sécurité 4 adaptée à protéger les passagers en cas d'accident (ici, l'habitacle est délimité par cette structure 4).

De façon plus précise, la cage tubulaire 4 comprend, en sa partie inférieure, deux tubes longitudinaux inférieurs 5 associés à trois tubes transversaux inférieurs 6, 7, 8 : un premier 6 formant l'extrémité arrière de la cage 4, un second 7 situé longitudinalement au niveau du bord avant des ouvertures d'accès à l'habitacle, et un troisième 8 situé encore plus en avant. De ce fait, les deux tubes longitudinaux inférieurs 5 et les premier et second tubes transversaux inférieurs 6, 7 forment un cadre 9 fermé approximativement de forme rectangulaire. La cage 4 comprend également, toujours en sa partie inférieure, de chaque côté, deux tubes d'extension transversale 10a saillants vers l'extérieur et reliés entre eux par un tube raccourci 10b parallèle aux tubes longitudinaux inférieurs 5.

Par ailleurs, la cage 4 comprend, en sa partie supérieure qui est située au niveau du toit, deux tubes longitudinaux supérieurs 11. Elle comprend également trois arceaux 12, 13, 14 reliant la partie inférieure et la partie supérieure. Chaque arceau 12, 13, 14 comprend, d'une part, un tube supérieur transversal qui est relié aux deux tubes longitudinaux supérieurs 11, et, d'autre part, deux tubes verticaux qui pendent depuis les extrémités du tube supérieur transversal. Un premier arceau avant 12 est fixé, par les extrémités inférieures de ses tubes verticaux, au second tube transversal inférieur 7 ; un second arceau intermédiaire 13 est fixé, par les extrémités inférieures de ses tubes verticaux, aux tubes raccourcis 10b, et le troisième arceau arrière 14 est fixé, par les extrémités inférieures de ses tubes verticaux, à deux tubes horizontaux longitudinaux 15 qui sont reliés à l'arceau intermédiaire 13 et qui sont situés au dessus des deux tubes longitudinaux inférieurs 5 pour passer au dessus du logement des roues arrières 16.

Le véhicule 1 étant à énergie électrique, il comprend au moins une (ici, trois) batterie 17 destinée à emmagasiner l'énergie pour son déplacement. Il comprend également un dispositif de propulsion qui, ici, comporte un moteur électrique 18, un réducteur 19 et un variateur électronique pour faire varier la vitesse du moteur 18.

Selon l'invention, l'ensemble des batteries 17 est logé dans au moins une fraction de la zone protégée définie par les cotés du cadre 9. Ainsi, ceci permet de fixer solidement les batteries 17 au cadre 9 qui est réalisé en tubes résistants et qui est intégré à la cage 4 du véhicule 1. En outre, du fait que les batteries 17 soient ceinturées par les tubes 5, 6, 7 délimitant le cadre 9, en cas d'accident, ce dernier permet de contenir les mouvements éventuels des batteries 17 causés par un choc, ce qui améliore la sécurité. L'autre fraction de la zone protégée est réservée par exemple aux moyens de propulsion du véhicule et/ou aux moyens de commande de la propulsion. L'intégration des moyens de propulsion et/ou de commande à l'intérieur du cadre permet de protéger ces éléments fragiles et coûteux en cas de choc.

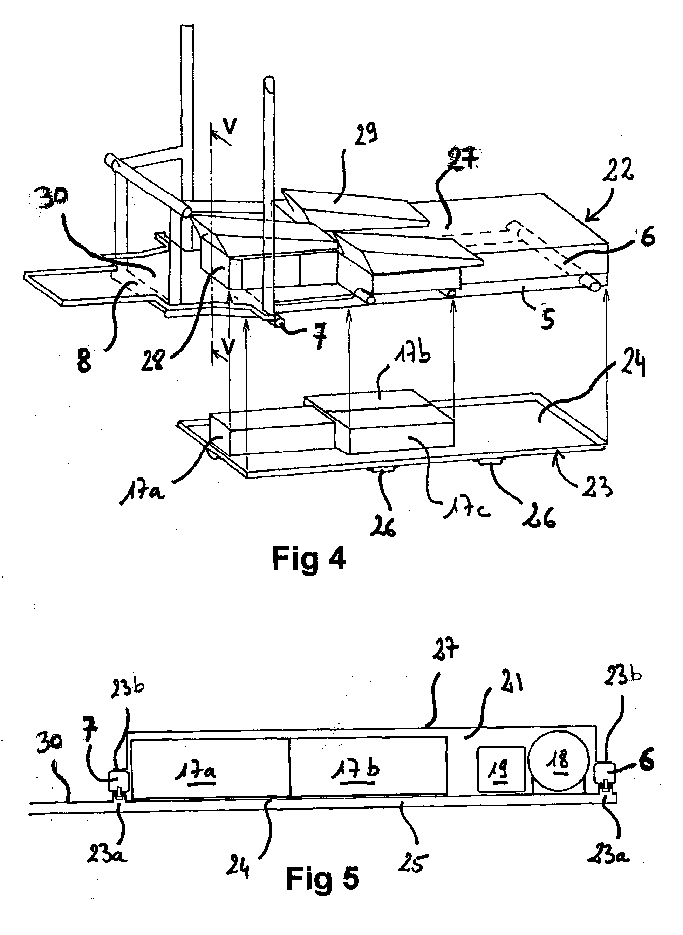

Dans le présent mode de réalisation, comme on peut le voir à la figure 5, l'ensemble des batteries 17 est disposé dans un caisson 21 fermé étanche. Ce caisson 21 sert également de logement au dispositif de propulsion et, de préférence, aux moyens de commande. Cette isolation permet de séparer physiquement l'intérieur du caisson 21 de l'habitacle, ce qui accroît la sécurité. Les tubes du cadre 9 (de la cage 4) sont de préférence des profilés à section constante ce qui permet de simplifier la construction.

Par étanche, on comprendra la mise en place de moyens tels des joints au niveau des plans de jonction pour éviter ou limiter les fuites de batteries.

De façon plus précise, le caisson 21 est formé par la réunion d'une plaque inférieure 22 à une plaque supérieure 23.

La plaque inférieure 22 supporte les batteries 17 (et le dispositif de propulsion) et elle est fixée au cadre 9 de façon séparable (ici, vissée par des vis 23a) pour rendre accessible l'intérieur du caisson 21 par le dessous du véhicule 1. Le montage et le démontage des batteries 17 est très simple : il suffit de dévisser la plaque inférieure 22, l'ensemble des batteries 17 pouvant alors être dégagé par le bas. Cette opération peut être réalisée dans un garage automobile sans équipement particulier.

La plaque inférieure 22 comprend une surface d'appui 24 sur laquelle repose l'ensemble des batteries 17 (et le dispositif de propulsion), et des barres de renfort qui permettent de la rigidifier. Dans le présent exemple, la surface d'appui 24 est formée par une tôle emboutie. Les barres de renfort quant à elles s'étendent sous la surface d'appui 24 et elles comprennent une barre longitudinale 25 qui s'étend selon l'axe longitudinal du véhicule 1 (au centre de la surface d'appui 24) et deux barres transversales 26 qui s'étendent selon la direction transversale.

La plaque supérieure 23, quant à elle, recouvre l'ensemble des batteries 17 (et le dispositif de propulsion) et elle est fixée sur le dessus du cadre 9, de préférence de façon inamovible (ici, soudée en 23b). Un tel montage par soudage permet d'accroître sensiblement la résistance du caisson 21.

La plaque supérieure 23 est mise en forme et comprend une surface supérieure 27 sensiblement horizontale et une surface latérale 28 sensiblement verticale qui pend depuis la surface supérieure 27 de façon à définir le caisson 21. Ici, la plaque supérieure 23 est formée par une tôle emboutie.

Le caisson 21 définit ainsi, à l'avant, le logement pour les batteries 17, et à l'arrière, le logement pour le dispositif de propulsion.

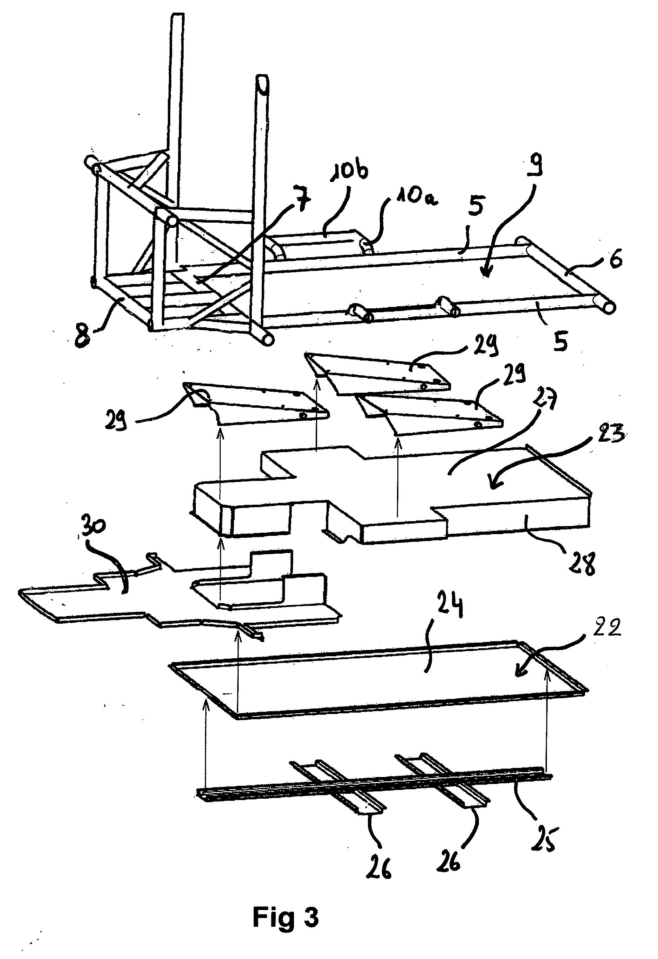

Le logement pour les batteries 17 a une forme en T dont la barre verticale s'étend horizontalement parallèlement à l'axe longitudinal du véhicule 1, et dont la barre horizontale s'étend horizontalement selon la direction transversale, l'extrémité libre du T formant l'extrémité avant du logement des batteries, et donc l'extrémité avant du caisson 21 (voir figures 3 et 4).

Le logement des batteries comprend trois zones de forme sensiblement identiques et contiguës, chaque zone étant adaptée à recevoir une batterie 17 ou un groupe de batteries. Les trois zones sont agencées de sorte que chaque batterie ou groupe de batteries s'étend longitudinalement parallèlement à l'axe longitudinal du véhicule 1. Une première batterie 17a est disposée à l'avant, les deux autres 17b, 17c étant disposées l'une à côté de l'autre, derrière et de façon symétrique par rapport à la première batterie 17a (cf. figure 4).

La surface supérieure 27 de la plaque supérieure 23 forme une partie du plancher de l'habitacle du véhicule 1. De façon plus précise, cette surface forme la surface d'ancrage des sièges : l'unique siège avant (pour le conducteur) prend appui sur l'extrémité libre du T, et les deux sièges arrière (pour des passagers), disposés de part et d'autre du siège avant, prennent appui sur la barre horizontale du T. Comme on peut le voir aux figures 2 et 4, les trois sièges prennent appui sur la surface supérieure 27, par l'intermédiaire de trois assises 29. L'autre partie du plancher est formé par une plaque annexe 30 qui est située à un niveau inférieur à celui de la surface supérieure 27 de la plaque supérieure 23 et qui permet de recevoir les pieds des trois passagers. Le niveau de la plaque annexe 30 correspond sensiblement à celui de la plaque inférieure 22.

L'agencement des ouvertures d'accès à l'habitacle et des portes latérales 3 est tel que les ouvertures sont disposées en face de la barre verticale du T : ceci rend à l'accès aux sièges avant et arrière très aisé tout en optimisant l'agencement de l'habitacle. On obtient ainsi un véhicule de petite taille d'utilisation aisée et sûre.

La présente invention n'est pas limitée au présent mode de réalisation. Le véhicule pourrait ainsi ne comprendre qu'un seul accès à l'habitacle (et donc une seule porte).

## Revendications

1. Véhicule (1) de petite taille comprenant une structure tubulaire en forme de cadre (9) réalisée à partir de tubes profilés (5, 6, 7) , comprenant un ensemble de batteries (17) destiné à emmagasiner l'énergie pour le déplacement du véhicule (1), et comprenant *un dispositif de* propulsion (18, 19), **caractérisé en ce que** le cadre (9) est fermé *par* une *plaque inférieure* (22) *portant l'ensemble des batteries* (17) et le *dispositif de propulsion* (18, 19), ladite *plaque inférieure* (22) *étant fixée au* cadre (9) de *façon séparable* et *accessible par le dessous du véhicule* et fermé par *une plaque supérieure* (23) *mise en forme pour comprendre une surface supérieure (27) sensiblement horizontale* et *une surface latérale (28) sensiblement verticale qui pend depuis la surface* supérieure, ladite *plaque* supérieure (23) *étant fixée par soudage sur le dessus* du *cadre* (9), afin de former un caisson (21) fermé étanche qui sert de logement à l'ensemble des batteries (17) et au *dispositif de propulsion,* ledit *cadre* (9) *définissant* par ses cotés une zone protégée de sorte qu'en cas de choc, les batteries (17) ceinturées puissent s'y appuyer et *le cadre (9) fait partie* de *la partie inférieure d'une cage tubulaire* de sécurité (4) *adaptée* à *protéger les passagers en cas d'accident.*

2. Véhicule (1) selon la revendication 1, **caractérisé en ce que** la plaque supérieure (23) est formée par une tôle emboutie.

3. Véhicule (1) selon l'une des revendications 1 ou 2, **caractérisé en ce que** le logement des batteries (17) a une forme en T dont la barre verticale s'étend horizontalement parallèlement à l'axe longitudinal du véhicule, et dont la barre horizontale s'étend horizontalement selon la direction transversale du véhicule.

4. Véhicule (1) selon la revendication 3, **caractérisé en ce que** le logement des batteries (17) comprend trois zones de forme identique et contiguës, chaque zone étant adaptée à recevoir une batterie ou un groupe de batteries, les trois zones étant agencées de sorte que chaque batterie s'étend longitudinalement parallèlement à l'axe longitudinal du véhicule, une batterie étant disposée à l'avant, les deux autres étant disposées l'une à côté de l'autre, derrière et de façon symétrique par rapport à la batterie avant.

5. Véhicule (1) selon l'une des revendications 3 ou 4, **caractérisé en ce qu'**il comprend, pour le conducteur, un siège avant prenant appui sur l'extrémité libre du T, et, pour des passagers, deux sièges arrière prenant appui sur la barre horizontale du T.

6. Véhicule (1) selon l'une des revendications 3 à 5, **caractérisé en ce qu'**il possède au moins une ouverture latérale permettant l'accès à l'habitacle, le ou les ouvertures latérales étant disposées en face de la barre verticale du T.

7. Véhicule (1) selon la revendication 1, **caractérisé en ce que** le caisson (21) comprend un logement pour le dispositif de propulsion du véhicule, ce logement étant derrière celui des batteries (17).

8. Véhicule selon la revendication 1, **caractérisé en ce que** la plaque inférieure (22) comprend une surface d'appui (24) sur laquelle repose l'ensemble des batteries (17), et des barres de renfort (25, 26) permettant de rigidifier la plaque inférieure (22).

## Patentansprüche

1. Kleines Fahrzeug (1) mit einer rahmenförmigen Röhrenstruktur (9) aus Profilrohren (5, 6, 7), umfassend einen Batteriesatz (17) zum Speichern von Energie zum Bewegen des Fahrzeugs (1) und umfassend eine Antriebseinrichtung (18, 19), **dadurch gekennzeichnet, dass** der Rahmen (9) durch eine den Batteriesatz (17) und die Antriebseinrichtung (18,19) tragende Bodenplatte (22) geschlossen ist, wobei diese Bodenplatte (22) mit dem Rahmen (9) so trennbar und von der Unterseite des Fahrzeugs zugänglich verbunden ist und durch eine obere Platte (23) geschlossen ist, die geformt ist, eine obere im Wesentlichen horizontale Fläche (27) und eine im Wesentlichen vertikale, von der oberen Fläche hängende Seitenfläche (28) zu umfassen, wobei diese obere Platte (23) durch Schweißen an der Oberseite des Rahmens (9) befestigt ist, um einen geschlossenen wasserdichten Kasten (21) zu bilden, der als Gehäuse für den Batteriesatz (17) und die Antriebsvorrichtung dient, wobei der Rahmen (9) durch seine Seiten einen geschützten Bereich derart begrenzt, dass im Falle von Stößen die angeschnallten Batterien (17) sich daran stützen können und der Rahmen (9) Teil des unteren Teils eines rohrförmigen Sicherheitskäfigs (4) ist, der angepasst ist, die Passagiere bei einem Unfall zu schützen.

2. Fahrzeug (1) nach Anspruch 1, **dadurch gekennzeichnet, dass** die obere Platte (23) durch ein Stanzblech gebildet ist.

3. Fahrzeug (1) nach einem der Ansprüche 1 oder 2, **dadurch gekennzeichnet, dass** das Gehäuse für die Batterien (17) eine T-Form aufweist, deren vertikale Stange sich horizontal parallel zur Fahrzeuglängsachse erstreckt und deren horizontale Stange sich horizontal in der Querrichtung des Fahrzeuges erstreckt.

4. Fahrzeug (1) nach Anspruch 3, **dadurch gekennzeichnet, dass** das Gehäuse der Batterien (17) drei angrenzende Bereiche gleicher Form aufweist, wobei jeder Bereich ausgebildet ist, um eine Batterie oder Gruppe von Batterien zu enthalten, wobei die drei Bereiche so angeordnet sind, dass jede Batterie sich längs parallel zur Fahrzeuglängsachse erstreckt, wobei eine Batterie vorne angeordnet ist, die beiden anderen neben einander, hinten und symmetrisch bezüglich der vorderen Batterie angeordnet sind.

5. Fahrzeug (1) nach einem der Ansprüche 3 oder 4, **dadurch gekennzeichnet, dass** es für den Fahrer einen vorderen, auf dem freien Ende des T getragenen Sitz und für die Fahrgäste zwei hintere, auf der horizontalen Stange des T getragene Sitze umfasst.

6. Fahrzeug (1) nach einem der Ansprüche 3 bis 5, **dadurch gekennzeichnet, dass** es zumindest eine seitliche Öffnung aufweist, um Zugang zu dem Fahrgastraum zu gewähren, wobei die seitliche(n) Öffnung(en) der vertikalen Stange des T zugewandt ist/sind.

7. Fahrzeug (2) nach Anspruch 1, **dadurch gekennzeichnet, dass** der Kasten (21) ein Gehäuse für die Fahrzeugantriebseinrichtung enthält, wobei dieses Gehäuse hinter dem der Batterien (17) liegt.

8. Fahrzeug nach Anspruch 1, dadurch gekenunzeichnet, dass die untere Platte (22) eine Auflagefläche (24) aufweist, auf welche der Batteriesatz (17) und Verstärkungsstangen (25,26) aufgebracht sind, um die Bodenplatte (22) zu versteifen.

## Claims

1. Small vehicle (1) comprising a tubular structure in the form of a frame (9) made from profiled tubes (5, 6, 7), comprising a set of batteries (17) which is intended to store the energy for the displacement of the vehicle (1), and comprising a propulsion device (18, 19), **characterised in that** the frame (9) is closed by a lower plate (22) that carries the set of batteries (17) and the propulsion device (18, 19), said lower plate (22) being attached to the frame (9) in a separable manner and in such a way as to be accessible from underneath the vehicle, and closed by an upper plate (23) that is shaped so as to have a substantially horizontal upper surface (27) and a substantially vertical lateral surface (28) that hangs from the upper surface, said upper plate (23) being attached by welding to the top of the frame (9) so as to form a sealed closed box (21) that serves for housing the set of batteries (17) and the propulsion device, said frame (9) defining by its sides a protected zone so that, in the event of an impact, the enclosed batteries (17) can be supported against it and the frame (9) forms part of the lower part of a tubular safety cage (4) designed to protect the passengers in the event of an accident.

2. Vehicle (1) according to claim 1, **characterised in that** the upper plate (23) is formed by a stamped metal sheet.

3. Vehicle (1) according to one of claims 1 or 2, **characterised in that** the housing for the batteries (17) has the shape of a T, the vertical bar of which extends horizontally parallel to the longitudinal axis of the vehicle and the horizontal bar of which extends horizontally in the transverse direction of the vehicle.

4. Vehicle (1) according to claim 3, **characterised in that** the housing for the batteries (17) comprises three zones of identical and contiguous shape, each zone being designed to receive one battery or one group of batteries, the three zones being arranged so that each battery extends longitudinally parallel to the longitudinal axis of the vehicle, one battery being arranged at the front, the two others being arranged one next to the other, behind the front battery and symmetrical with respect thereto.

5. Vehicle (1) according to one of claims 3 or 4, **characterised in that** it comprises, for the driver, a front seat resting on the free end of the T, and, for passengers, two rear seats resting on the horizontal bar of the T.

6. Vehicle (1) according to one of claims 3 to 5, **characterised in that** it has at least one side opening which permits access to the passenger compartment, the side opening(s) being arranged opposite the vertical bar of the T.

7. Vehicle (1) according to claim 1, **characterised in that** the box (21) comprises a housing for the propulsion device of the vehicle, this housing being behind the housing for the batteries (17).

8. Vehicle according to claim 1, **characterised in that** the lower plate (22) comprises a bearing surface (24), on which the set of batteries (17) rests, and reinforcing bars (25, 26) enabling the lower plate (22) to be made more rigid.
